# EUROPEAN PATENT APPLICATION

(11) **EP 1 544 497 A2**
(43) Date of publication of application: **22.06.2005**
(21) Application number: 04106464.3
(22) Date of filing: 10.12.2004
(51) Int. Cl.: F16F 9/36

(54) **A sealing device for shock absorbers**

(30) Priority: 17.12.2003 IT TO20030194 U
(71) Applicant: RFT S.p.A., 10121 Torino (IT)
(72) Inventor: Restivo, Riccardo, I-10138, Torino (IT)
(74) Representative: Fioravanti, Corrado

(57) **Abstract**

An annular body (10) of rubber has a seat (11) for an annular metal reinforcing insert (20), a conical dust-seal lip (12) projecting in a radially inward direction from a first side of the seat (11) and at least two essentially coaxial lips (13, 15), disposed on a second side opposite the first side with respect to the seat (11). These two lips comprise a radially outer static seal lip (13) and a radially inner oil-seal lip (15) which has a surface (15c, 15d) for contacting the stem (A) of a shock absorber elastically and in a sliding manner. The inner oil-seal lip (15) forms a proximal or root portion (15a) serving as a hinge to allow elastic flexure of the lip (15), and a distal portion (15b) thickened radially with respect to the proximal portion and having a sliding contact surface (15c), (15d). The oil-seal lip (15) is not associated with any further elastic element able to clamp the lip (15) in a radially inward direction against a shock absorber stem (A).

## Description

The present invention relates to a sealing device for shock absorbers of the type defined in the preamble of Claim 1.

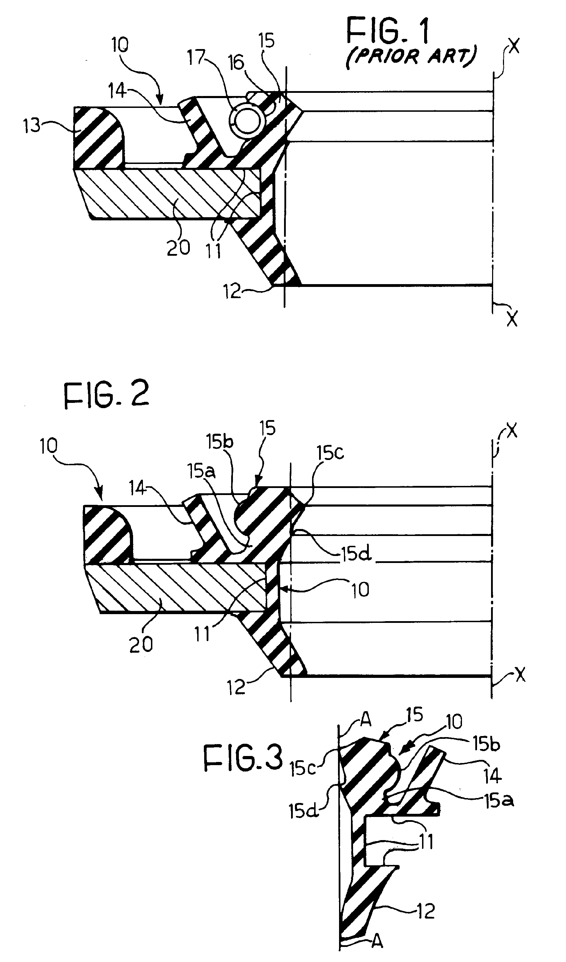

Sealing devices of the type illustrated schematically in Figure 1 of the attached drawings are currently known. With reference to Figure 1, a sealing device of conventional type comprises a generally annular body 10 of rubber with a section shaped to distinguish different parts which perform respective different functions. In its central region the rubber body 10 has an outer circumferential groove 11 of generally rectangular section in which is partially fitted an annular metal insert 20 which serves as a static support for the axial loads to which the sealing device is subject during its operation. On the axially lower side with respect to the metal insert 20 the rubber body 10 has a conical dust-seal lip 12 projecting radially inwardly. From the opposite or axially upper side with respect to the metal insert 20 the body 10 forms three co-axial lips 13, 14, 15, being a radially outer static seal lip 13, an optional intermediate lip 14, and a radially inner oil-seal lip 15 which is clamped in the radially inner direction by a circumferential spring 17 positioned in a groove 16 formed in a radially outer surface of the oil-seal lip 15 to ensure the sliding contact pressure of this lip against the stem of a shock absorber (not illustrated).

The object of the present invention is to provide an improved seal device for shock absorbers which makes it possible to eliminate the conventional circumferential spring mentioned above and therefore reduce the costs of production of the spring and the time associated with its assembly on the sealing device.

Another object of the invention is to provide a sealing device able to ensure a correct behaviour of the sealing lips of the device, and in particular to ensure that these exert a correct contact pressure against the stem on which the sealing device is to be mounted.

These objects are achieved, in accordance with the present invention, by a sealing device having the characteristics defined in the annexed Claims.

The structural and functional characteristics of a preferred, but non-limitative embodiment of a device according to the invention will now be described; reference is made to the attached drawings, in which the same reference numerals designate the same or corresponding parts in the various figures. In the drawings;
Figure 1 is a partial axial sectional view of a sealing device of conventional type;
Figure 2 is a partial axial sectional view of a sealing device according to the invention in an undeformed condition; and
Figure 3 is a partial axial sectional view of the device of Figure 2 applied to the stem of a shock absorber.

Referring now to Figure 2, a sealing device according to the invention differs from the conventional device illustrated in Figure 1 essentially by the absence of the conventional circumferential spring and by the new functional shape of the oil-seal lip 15.

In very brief summary, the sealing device still comprises a rubber body 10 of overall annular shape variously formed with an annular metal insert 20 of approximately rectangular section partially received in a rectangular groove 11 formed in a median position in the outer surface of the body 10. The body 10 further has a conventional conical dust-seal lip 12 on one side of the groove 11 and three coaxial lips 13, 14, 15 on the opposite side. The static seal lip 13 and the intermediate lip 14, which is optional, are the same as in the conventional arrangement.

The inner oil-seal lip 15 comprises a root or proximal portion 15a with a hinge function to allow elastic flexure of the lip, and a projecting or distal portion 15b which is thickened in the radial or transverse direction.

In the present context the terms and expressions indicating positions and orientations such as "axial" and "radial" or "transverse" are intended to refer to the central geometric axis x (Figure 1) of the device, coincident with the longitudinal central axis of the shock absorber on which the device is to be applied.

The thickened distal portion 15b has a conventional main sliding contact formation 15c in the form of a right-angle on the radially inner side and a secondary sliding contact formation 15d. Tests conducted by the applicant demonstrate that excellent results in terms of contact pressures and correct positioning of the lip 15 on the shock absorber's stem are obtained if, with respect to the hinge or proximal portion 15a, the thickening of the distal portion 15b is about 0.5mms (about 50%). In Figure 3 is schematically illustrated the shape of the rubber body 10 in an operative condition applied to the stem A of a shock absorber.

## Claims

1. A sealing device for shock absorbers, of the type comprising a body (10) of rubber or elastomeric material of generally annular shape forming
an outer circumferential seat (11) for partially receiving an annular reinforcing metal insert (20),
a conical dust-seal lip (12) projecting radially inwardly from a first side of the seat (11),
at least two essentially coaxial lips (13), (15) disposed on a second side opposite the first side with respect to the seat (11), and comprising a radially outer static seal lip (13), a radially inner oil-seal lip (15) which has at least one surface (15c, 15d) for contacting elastically, and in a sliding manner, the stem (A) of a shock absorber,
**characterised in that**
the inner oil-seal lip (15) forms a proximal or root portion (15a) serving as a hinge to allow elastic flexure of the lip (15), and a distal portion (15b) radially thickened with respect to the proximal portion and having the said at least one surface (15c, 15d) for contacting the stem (A) of a shock absorber in a sliding manner, and **in that**
the oil-seal lip (15) is not associated with any further elastic element operable to clamp the lip (15) in a radially inward direction against a shock absorber stem (A).

2. A sealing device according to Claim 1, **characterised in that** the distal portion (15b) is radially thickened by about 50% with respect to the proximal portion (15a).

3. A sealing device according to Claim 1, **characterised in that** the distal portion (15b) is radially thickened at most by about 0.5 mms with respect to the proximal portion (15a).

4. A sealing device according to Claim 1, **characterised in that** it further includes a further lip (14), intermediate between the outer static seal lip (13) and the inner oil-seal lip (15), and essentially coaxial with these.
